# EUROPÄISCHE PATENTSCHRIFT

(11) **EP 1 608 941 B1**
(45) Veröffentlichungstag und Bekanntmachung des Hinweises auf die Patenterteilung: **26.07.2006**
(21) Anmeldenummer: 04724584.0
(22) Anmeldetag: 31.03.2004
(51) Int. Cl.: G01L 19/06

(54) **DRUCKAUFNEHMER MIT FLAMMENDURCHSCHLAGSPERRE**
PRESSURE SENSOR WITH FLAME ARRESTOR
CAPTEUR DE PRESSION A DISPOSITIF ANTIRETOUR DE FLAMME

(30) Priorität: 01.04.2003 DE 10314920
(43) Veröffentlichungstag der Anmeldung: 28.12.2005
(73) Patentinhaber: Endress + Hauser GmbH + Co. KG, 79689 Maulburg (DE)
(72) Erfinder: LANGE, Jürgen, 34246 Vellmar (DE); BECHER, Raimund, 79238 Ehrenkirchen (DE)
(74) Vertreter: Andres, Angelika Maria
(86) Internationale Anmeldenummer: PCT/EP2004/003407
(87) Internationale Veröffentlichungsnummer: WO 2004/088267

(56) Entgegenhaltungen:
- US-A- 4 733 563
- US-A- 5 583 294

## Beschreibung

Die vorliegende Erfindung betrifft Druck- und Differenzdruckmessgeräte mit einem hydraulischen Messwerk, bzw. einem hydraulischen Trennkörper. Bei diesen Messgeräten wird eine Trennmembran mit dem zu messenden Druck beaufschlagt, wobei die Trennmembran den Druck an ein hydraulisches Medium überträgt, welches den Druck über einen geeigneten Druckkanal einer Druckmeßzelle zuleitet, welche ein druckempfindliches Element, insbesondere eine Messmembran aufweist, die mit dem Druck beaufschlagt wird. Der Druckkanal erstreckt sich häufig als Bohrung durch einen so genannten Prozeßanschlußzapfen, mit dem der Druckaufnehmer an eine druckführende Leitung angeschlossen wird.

Für Geräte in explosionsgeschützten Anwendungen ist es erforderlich, daß der Druckkanal in Abhängigkeit von seiner Länge einen hinreichend kleinen Durchmesser bzw. eine hinreichend kleine Spaltbreite aufweist, um als Flammendurchschlagsperre zu dienen. Da es sehr schwierig ist, hinreichend lange Kanäle mit einem Durchmesser von weniger als beispielsweise 0,1 mm zu Bohren, hat sich die Lösung durchgesetzt, Bohrungen mit einem größeren Durchmesser auszuführen und anschließend einen Füllstift in die Bohrung einzusetzen, so daß sich zwischen dem Füllstift und der Bohrungswand ein hinreichend schmaler Spalt verbleibt. Diese Lösung ist jedoch insofern nachteilig, als auch die Bohrung mit dem größeren Durchmesser mit der erforderlichen Präzision ausgeführt werden muß, damit nach dem Einsetzen des Füllstiftes die zulässige maximale Spaltbreite nicht überschritten wird. Je länger der Prozeßanschlußzapfen ist, so größer ist folglich der Aufwand, die Bohrung für den Druckkanal auszuführen.

Der vorliegenden Erfindung liegt daher die Aufgabe zugrunde, einen Druckaufnehmer bereitzustellen, welcher die beschriebenen Probleme überwindet. Die Aufgabe wird erfindungsgemäß gelöst durch den Druckaufnehmer gemäß des unabhängigen Patentanspruchs 1.

Der erfindungsgemäße Druckaufnehmer zum Erfassen eines Prozeßdrucks umfaßt eine Druckmeßzelle und einen Grundkörper mit einer ersten Oberfläche und einer zweiten Oberfläche, durch den sich zwischen der ersten Oberfläche und der zweiten Oberfläche ein Druckkanal erstreckt, durch welchen die Druckmeßzelle mittels eines Übertragungsmediums mit dem Prozeßdruck beaufschlagbar ist, wobei der Druckkanal eine Flammendurchschlagsperre aufweist, wobei ferner der Druckkanal einen ersten Abschnitt und einen zweiten Abschnitt umfaßt, die Flammendurchschlagsperre vollständig in dem ersten Abschnitt angeordnet ist, und der zweite Abschnitt eine Bohrung aufweist, in der ein Füllkörper angeordnet ist. Der Spalt zwischen der Bohrung und dem Füllkörper im zweiten Abschnitt kann mit größeren Toleranzen gefertigt sein, so daß er nicht die Anforderungen an eine Flammendurchschlagsperre erfüllt.

Vorzugsweise ist die Flammendurchschlagsperre in dem ersten Abschnitt dadurch realisiert, daß der erste Abschnitt eine Bohrung aufweist, in welcher ein Füllstift angeordnet ist, wobei der verbleibende Spalt zwischen der Bohrung und dem Füllstift den Anforderungen an eine Flammendurchschlagsperre genügt. Der Füllstift kann unabhängig von dem Füllkörper als separates Teil in den ersten Abschnitt eingesetzt werden, oder er kann einstückig mit dem Füllkörper ausgebildet sein. Sofern der Füllstift einstückig mit dem Füllkörper ausgebildet ist, weist der Füllstift vorzugsweise einen geringeren Durchmesser auf als der Füllkörper.

In einer anderen Ausgestaltung kann die Flammendurchschlagsperre dadurch realisiert werden, daß der erste Abschnitt eine Bohrung aufweist, deren Durchmesser bei gegebener Länge den Anforderungen an eine Flammendurchschlagsperre genügt.
Die Erfindung kann gleichermaßen bei Differenzdruckaufnehmern realisiert werden, welche mindestens einen Druckkanal, vorzugsweise jedoch zwei Druckkanäle, der beschriebenen Art aufweisen, wobei der erste Druckkanal der Meßzelle einen ersten Druck zuführt und der Druckkanal der Meßzelle einen zweiten Druck zuführt.

Weitere Vorteile und Gesichtspunkte der Erfindung ergeben sich aus den abhängigen Ansprüchen, der Beschreibung der Ausführungsbeispiele und den Zeichnungen. Es zeigt:
- Fig.1:: Einen Schnitt durch ein erstes Ausführungsbeispiel eines erfindungsgemäßen Druckaufnehmers;
- Fig.2:: Einen Schnitt durch ein zweites Ausführungsbeispiel eines erfindungsgemäßen Druckaufnehmers; und
- Fig. 3:: Einen Schnitt durch ein drittes Ausführungsbeispiel eines erfindungsgemäßen Druckaufnehmers.

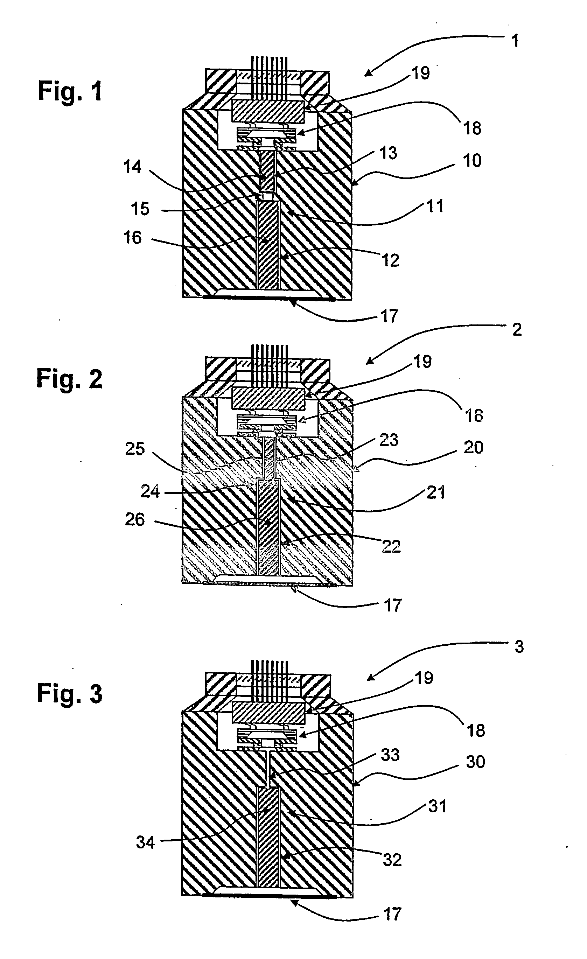

Der in Fig. 1 gezeigte Druckaufnehmer 1 umfasst einen Grundkörper 10 mit vorzugsweise abschnittsweise zylindrischer oder kegelstumpfförmiger Geometrie. An der prozeßseitigen Stirnfläche des Grundkörpers 10 ist eine Trennmembran 17 mit ihrem Randbereich unter Einschluß einer Druckkammer druckdicht befestigt. Die Druckkammer umfaßt vorzugsweise eine Vertiefung in der Stirnfläche, wobei die Basisfläche der Vertiefung als konturiertes Membranbett aufweisen kann, welches zur Kontur der Trennmembran 17 komplementär ist. Einzelheiten zur Gestaltung des Membranbetts und der Trennmembran sind dem Fachmann geläufig und beispielsweise in dem US Patent 5,495,768 offenbart. Von der Druckkammer erstreckt sich ein Druckkanal 11 zu einem einer Sensorkammer, die durch eine Aussparung in der dem Prozeß abgewandten zweiten Stirnfläche des Grundkörpers 10 ausgebildet ist. In der Sensorkammer ist eine Druckmeßzelle 18 angeordnet, wobei der Druckkanal 11 in einem von der Druckmeßzelle 18 abgeschlossenen. Bereich der Sensorkammer mündet. Derzeit werden piezoresistive Si-Druckmeßzellen bevorzugt, wobei gleichermaßen beliebige andere, insbesondere kapazitive Druckmeßzellen oder solche nach dem Resonatorprinzip geeignet sind. Das zwischen der Druckmeßzelle 18 und der Trennmembran 17 eingeschlossene Volumen, einschließlich des freien Volumens des Druckkanals 11, d.h. des Volumens welches nicht durch einen Füllkörper bzw. einen Füllstift gefüllt ist, ist mit einer hydraulischen Übertragungsflüssigkeit gefüllt, wobei derzeit Silikonöle als Übertragungsflüssigkeit bevorzugt sind. Wenn im Meßbetrieb ein Prozeßdruck auf die äußere Oberfläche der Trennmembran 17 wirkt, wird dieser aufgrund der Flexibilität der Trenmmembran 17 in die Druckkammer und von dort über die Übertragungsflüssigkeit auf die Meßzelle übertragen.

Der Druckkanal 11 weist in einem ersten Abschnitt 13 eine Flammendurchschlagsperre auf. Die Flammendurchschlagsperre ist dadurch realisiert, daß der erste Abschnitt 13 eine Bohrung aufweist, die mit sehr geringen Toleranzen hinsichtlich ihres Durchmessers gefertigt ist, und in die ein zylindrischer Füllstift 14 eingesetzt ist der ebenfalls eine mit geringen Toleranzen gearbeitete Mantelfläche aufweist, so daß der verbleibende Ringspalt zwischen der Wandung der Bohrung und der Mantelfläche den Anforderungen an eine Flammendurchschlagsperre genügt. Zur Zentrierung des Füllstifts 14 kann dieser in seinen Endabschnitten radiale Vorsprünge aufweisen, die ggf. auch dazu dienen können, den Füllstift 14 in einem Klemmsitz in der Bohrung des ersten Abschnitts 13 zu zentrieren. Um den Füllstift mittels eines Klemmsitzes in Position zu halten, kann der Füllstift auch leicht gebogen sein, so daß er mit seinen Endabschnitten und einem mittleren Abschnitt gegen die Wand des ersten Abschnitts 13 drückt.

Ein Klemmsitz kann gleichermaßen durch eine Verstemmung an der Grundkörperstimseite erzielt werden. Hierzu wird in der Nachbarschaft der Durchtrittsöffnung des Druckkanals beispielsweise mit einem Dorn eine lokale plastische Verformung in die Stirnseite eingebracht, welche den Endabschnitt des Druckkanals so weit verengt, daß der Füllstift eingeklemmt wird.

Zur Kontrolle der axialen Position des Füllstifts kann in dem Druckkanal 11 am prozeßseitigen Ende des ersten Abschnitts eine Verengung 15 vorgesehen sein, welche eine axiale Anschlagfläche für den Füllstift 14 aufweist.

Die genauen Abmessungen für die Bohrung in dem ersten Abschnitt 13 und den Füllstift 14 ergeben sich aus den Anforderungen an eine Flammendurchschlagsperre und sind im einzelnen der jeweiligen Konstruktion anzupassen. Exemplarische Abmessungen sind in der nachfolgenden Tabelle I angegeben:

**Tabelle I**

| **Wirksame Länge [mm]** | **Erlaubte Spaltbreite [mm]** | **Bohrungs- und Füllstiftlänge [mm]** | **Bohrungsdurchmesser [mm]** | **Füllstiftdurchmesser [mm]** |
|---|---|---|---|---|
| ≥ 6 | 0,05 | 6 | 2,700±0,005 | 2,660±0,005 |
| ≥12,5 | 0,08 | 12,5 | 3,000±0,012 | 2,945±0,012 |
| ≥ 40 | 0,10 | 40 | 3,000±0,017 | 2,935±0,017 |

Die Fertigung der Oberflächen für die Flammendurchschlagsperre ist sehr aufwendig, weshalb die Größe dieser Flächen, d.h. die Länge der Bohrungen und der Füllstifte vorzugsweise auf ein Mindestmaß reduziert wird.

Die restliche Länge des Druckkanals 11 erstreckt sich in einem zweiten Abschnitt 12 zwischen der Verengung 15 und der Druckkammer prozeßseitigen Druckkammer. Um das Füllvolumen des Übertragungsmediums zu reduzieren, ist in dem zweiten Abschnitt des 12 ein Füllkörper 16 angeordnet. Die Bohrung des zweiten Abschnitts 12 sowie die Mantelfläche des Füllkörpers 16 brauchen nicht mit der Präzision der entsprechenden Flächen der Flammendurchschlagsperre gefertigt werden. Wichtig ist lediglich daß zwischen der Bohrung und dem Füllkörper 16 ein Spalt verbleibt, durch den die Übertragungsflüssigkeit den Druck von der Druckkammer zum Sensorelement 18 Übertragen kann. Hierfür sind größere Toleranzen zulässig. Durch die Trennung der Funktion der Volumenreduzierung von der Funktion der Flammendurchschlagsperre kann somit der Fertigungsaufwand erheblich reduziert werden.

Die axiale Position des Füllkörpers 16 wird durch die durch die prozeßseitige Anschlagfläche der Verengung 15 definiert. Zudem können entweder radiale Vorsprünge den Füllkörper 16 in der Bohrung des zweiten Abschnitts fixieren, oder der Füllkörper kann durch eine leichte Biegung bzw. eine Verstemmung im Klemmsitz gesichert werden.

Die in Fign. 2 und 3 gezeigten Ausführungsbeispiele 2 bzw. 3 eines Druckaufnehmers haben im wesentlichen Aufbau wie der oben beschriebene Druckaufnehmer 1 aus Fig. 1, und gleiche Bezugszeichen verweisen auf Teile und Komponenten mit gleichen Funktionen. Im folgenden werden daher nur die Unterschiede zu dem Druckaufnehmer aus Fig. 1 erläutert.

Der in Fig. 2 gezeigte Druckaufnehmer 2 weist in seinem Grundkörper 20 einen Druckkanal 21 auf mit eine anderen Gestaltung als der Druckkanal 10 des ersten Ausführungsbeispiels. Der Druckkanal 21 umfaßt einen ersten Abschnitt 23 und einen zweiten Abschnitt 22, wobei der erste Abschnitt direkt an den zweiten Abschnitt anschließt, ohne durch eine Verengung getrennt zu sein. Der erste Abschnitt 23 weist einen geringeren Durchmesser auf als der zweite Abschnitt 22. Daher ist am Übergang zwischen dem ersten Abschnitt und dem zweiten Abschnitt eine erste axiale Schulter ausgebildet. In den Druckkanal 21 ist ein einstückiges Füllmodul 24 eingesetzt, welches in einem ersten Abschnitt einen Füllstift 25 und in einem zweiten Abschnitt ein Füllkörper 26 aufweist, wobei der Füllkörper vorzugsweise unmittelbar an den Füllstift angrenzt, so daß zwischen dem Füllstift und dem Füllkörper eine zweite axiale Schulter ausgebildet ist. Der Durchmesser des Füllstifts 25 ist so auf die Abmessungen des ersten Abschnitt 23 des Druckkanals 21 abgestimmt, daß der erste Abschnitt 23 mit eingesetzten Füllstift die Anforderungen an eine Flammendurchschlagsperre erfüllt. Der Füllkörper 26 ist so bemessen, daß das im Druckkanal 21 eingeschlossene freie Volumen, welches mit einer Übertragungsflüssigkeit gefüllt ist, minimiert wird.

Die axiale Position des einstückigen Füllmoduls 24 im Druckkanal 21 ist dadurch definiert, daß die zweite axiale Anschlagfläche an der ersten axialen Anschlagfläche anliegt. Zur axialen Fixierung des Füllmoduls 24 bietet sich wiederum ein Klemmsitz an.

Bei der Ausführungsform des Druckaufnehmers in Fig. 3 weist der Grundkörper 30 einen Druckkanal 31 mit einen ersten Abschnitt 33 auf, der ohne Einsatz eines Füllstifts die Anforderungen an eine Flammendurchschlagsperre erfüllt. Prozeßseitig schließt an den ersten Abschnitt 33 des Druckkanals 31 ein zweiter Abschnitt 32 an, der einen erheblich größeren Durchmesser aufweist als der erste Abschnitt. In dem zweiten Abschnitt 32 ist ein Füllkörper 34 angeordnet, der das freie Volumen des zweiten Abschnitts 32 des Druckkanals 31 minimiert. Die axiale Position des Füllkörpers 34 ist durch einen axialen Anschlag definiert, der am Übergang zwischen dem ersten Abschnitt 33 und dem zweiten Abschnitt 32 ausgebildet ist. Die axiale Fixierung des Füllkörpers erfolgt, wie oben beschrieben, durch einen Klemmsitz.

## Patentansprüche

1. Druckaufnehmer zum Erfassen eines Prozeßdrucks, umfassend:
eine Druckmeßzelle und einen Grundkörper mit einer ersten Oberfläche und einer zweiten Oberfläche, durch den sich zwischen der ersten Oberfläche und der zweiten Oberfläche ein Druckkanal erstreckt, durch welchen die Druckmeßzelle mittels eines Übertragungsmediums mit dem Prozeßdruck beaufschlagbar ist, wobei der Druckkanal eine Flammendurchschlagsperre aufweist, **dadurch gekennzeichnet,**
**daß** der Druckkanal einen ersten Abschnitt und einen zweiten Abschnitt umfaßt, wobei die Flammendurchschlagsperre in dem ersten Abschnitt angeordnet ist,
und wobei der zweite Abschnitt eine Bohrung aufweist, in der ein Füllkörper angeordnet ist, wobei der zweite Abschnitt nicht den Anforderungen an eine Flammendurchschlagsperre genügt.

2. Druckaufnehmer, zur Erfassung des Differenzdrucks zwischen einem ersten Prozeßdruck und einem zweiten Prozeßdruck, umfassend:
eine Differenzdruckmeßzelle, einen Grundkörper, durch den sich zwei Druckkanäle erstrecken, über welche die Differenzdruckmeßzelle mittels eines Übertragungsmediums mit dem ersten und dem Prozeßdruck beaufschlagbar ist, wobei mindestens einer der beiden Druckkanäle eine Flammendurchschlagsperre aufweist, **dadurch gekennzeichnet,**
**daß** mindestens ein Druckkanal einen ersten Abschnitt und einen zweiten Abschnitt umfaßt, wobei die Flammendurchschlagsperre in dem ersten Abschnitt angeordnet ist, und wobei der zweite Abschnitt eine Bohrung aufweist, in der ein Füllkörper angeordnet ist, und wobei der zweite Abschnitt nicht den Anforderungen an eine Flammendurchschlagsperre genügt.

3. Druckaufnehmer nach Anspruch 1, wobei der erste Abschnitt eine Bohrung aufweist, in welcher ein Füllstift angeordnet ist, wobei der verbleibende Spalt zwischen der Bohrung und dem Füllstift den Erfordernissen an eine Flammendurchschlagsperre genügt.

4. Druckaufnehmer nach Anspruch 2, wobei der Füllstift unabhängig von dem Füllkörper als separates Teil in den ersten Abschnitt eingesetzt ist.

5. Druckaufnehmer nach Anspruch 2, wobei der Füllstift einstückig mit dem Füllkörper ausgebildet ist.

6. Druckaufnehmer nach Anspruch 4, wobei der Füllstift einen geringeren Durchmesser aufweist als der Füllkörper.

7. Druckaufnehmer nach einem der vorherigen Ansprüche, wobei der erste Abschnitt des Druckkanals mit geringeren Toleranzen gefertigt ist, als der zweite Abschnitt des Druckkanals.

8. Druckaufnehmer nach einem der Ansprüche 2 bis 6, wobei der Füllstift mit geringeren Toleranzen gefertigt ist, als der Füllkörper.

9. Druckaufnehmer nach Anspruch 1, wobei der erste Abschnitt eine Bohrung aufweist, deren Durchmesser bei gegebener Länge den Anforderungen an eine Flammendurchschlagsperre genügt.

10. Druckaufnehmer nach Anspruch 2, oder einem davon abhängigen Anspruch, wobei beide Druckkanäle jeweils eine Flammendurchschlagsperre sowie einen ersten Abschnitt und einen zweiten Abschnitt aufweisen, wobei ferner die Flammendurchschlagsperre jeweils in dem ersten Abschnitt angeordnet ist, und der zweite Abschnitt jeweils eine Bohrung aufweist, in der ein Füllkörper angeordnet ist.

## Claims

1. A pressure sensor for detecting a process pressure, comprising:
a pressure measuring cell and a base body having a first surface and a second surface, through which base body there extends, between the first surface and the second surface, a pressure channel through which the pressure measuring cell can be pressurised with the process pressure using a transfer medium, the pressure channel having a flame arrestor, **characterised in that**
the pressure channel comprises a first section and a second section, the flame arrestor being arranged in the first section,
and the second section having a hole in which a filler body is arranged, the second section not fulfilling the requirements of a flame arrestor.

2. A pressure sensor for detecting the differential pressure between a first process pressure and a second process pressure and comprising:
a differential pressure measuring cell, a base body through which there extend two pressure channels, by means of which the differential pressure measuring cell can be pressurised with the first and the *[lacuna]* process pressure using a transfer medium, at least one of the two pressure channels having a flame arrestor, **characterised in that**
at least one pressure channel comprises a first section and a second section, the flame arrestor being arranged in the first section, and the second section having a hole in which a filler body is arranged, and the second section not fulfilling the requirements of a flame arrestor.

3. A pressure sensor according to claim 1, the first section having a hole in which a filler pin is arranged, the gap remaining between the hole and the filler pin fulfilling the requirements of a flame arrestor.

4. A pressure sensor according to claim 2, the filler pin being inserted as a separate part, independently of the filler body, into the first section.

5. A pressure sensor according to claim 2, the filler pin being integral with the filler body.

6. A pressure sensor according to claim 4, the filler pin having a smaller diameter than the filler body.

7. A pressure sensor according to any one of the preceding claims, the first section of the pressure channel being manufactured with lower tolerances than the second section of the pressure channel.

8. A pressure sensor according to any one of claims 2 to 6, the filler pin being manufactured with lower tolerances than the filler body.

9. A pressure sensor according to claim 1, the first section having a hole, the diameter of which, at a given length, fulfils the requirements of a flame arrestor.

10. A pressure sensor according to claim 2 or a claim dependent thereon, each of the pressure channels having a flame arrestor and also a first section and a second section, and each of the flame arrestors being arranged in the first section, and each of the second sections having a hole in which a filler body is arranged.

## Revendications

1. Capteur de pression pour la détection d'une pression de procédé, comportant :
- une cellule de mesure de pression et un corps de base avec une première surface et une deuxième surface ; un canal de pression s'étendant entre la première surface et la deuxième surface, au moyen duquel canal on peut appliquer une pression via un médium de transfert sur la cellule de mesure de pression, le canal de pression comportant un coupe-flammes, **caractérisé en ce que**,
- ledit canal comporte une première section et une deuxième section, le coupe-flammes étant entièrement disposé dans la première section,
- et la deuxième section comportant un alésage dans lequel on a disposé un corps de remplissage, la deuxième section ne remplissant pas les exigences d'un coupe-flammes.

2. Capteur de pression pour la détection d'une pression de différence entre une première pression de procédé et une deuxième pression de procédé, comportant :
- une cellule de mesure de pression de différence, un corps de base à travers lequel s'étendent deux canaux de pression, via desquels on peut appliquer une première et une deuxième pression de procédé au moyen du médium de transfert sur la cellule de mesure de pression de différence, où au moins un des deux canaux de pression comporte un coupe-flammes, **caractérisé en que** ,
- au moins un canal de pression comporte une première section et une deuxième section, le coupe - flammes étant disposé dans la première section, et la deuxième section comportant un alésage dans lequel est disposé un corps de remplissage, et la deuxième section ne remplissant pas les exigences d'un coupe - flammes.

3. Capteur de pression selon la revendication 1, où la première section comporte un alésage dans lequel est disposé une tige de remplissage, la fente restante entre l'alésage et la tige de remplissage remplissant les exigences d'un coupe - flammes.

4. Capteur de pression selon la revendication 2, où la tige de remplissage est introduite, de façon indépendante, en tant que pièce séparée dans la première section.

5. Capteur de pression selon la revendication 2, où la tige de remplissage est réalisée de façon solidaire avec le corps de remplissage.

6. Capteur de pression selon la revendication 4, où la tige de remplissage présente un plus petit diamètre que le corps de remplissage.

7. Capteur de pression selon une des revendications précédentes, où la première section du canal de pression est fabriquée avec des plus faibles tolérances que la deuxième section du canal de pression.

8. Capteur de pression selon une des revendications 2 à 6, où la tige de remplissage est fabriquée avec des plus faibles tolérances que le corps de remplissage.

9. Capteur de pression selon la revendication 1, où la première section comporte un alésage dont le diamètre remplit pour une longueur donnée les exigences d'un coupe - flammes.

10. Capteur de pression selon la revendication 2, ou une revendication indépendante de cette revendication, où les deux canaux de pression comportent à chaque fois un coupe - flammes ainsi qu'une première section et une deuxième section, où, en outre, le coupe-flammes est disposé à chaque fois dans la première section et la deuxième section comporte à chaque fois un alésage dans lequel est disposé un corps de remplissage.
